(19) Europäisches Patentamt / European Patent Office / Office européen des brevets

(11) **EP 4 495 591 B1**

(12) **EUROPEAN PATENT SPECIFICATION**

(45) Date of publication and mention
of the grant of the patent:
**08.04.2026 Bulletin 2026/15**

(21) Application number: **22947837.5**

(22) Date of filing: **20.06.2022**

(51) International Patent Classification (IPC):
**H01J 49/00** (2006.01)  **H01J 49/10** (2006.01)
**H01J 49/04** (2006.01)  **G01N 27/68** (2006.01)

(52) Cooperative Patent Classification (CPC):
**G01N 27/68; H01J 49/0009; H01J 49/105;**
H01J 49/0036; H01J 49/0463

(86) International application number:
**PCT/JP2022/024472**

(87) International publication number:
**WO 2023/248273 (28.12.2023 Gazette 2023/52)**

(54) **METHOD FOR QUANTITATIVE ANALYSIS OF ELEMENTS**

VERFAHREN ZUR QUANTITATIVEN ANALYSE VON ELEMENTEN

PROCÉDÉ D'ANALYSE QUANTITATIVE D'ÉLÉMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.01.2025 Bulletin 2025/04**

(73) Proprietor: **RORZE IAS Inc.**
**Hino-shi, Tokyo 191-0011 (JP)**

(72) Inventors:
• **KAWABATA Katsuhiko**
**Hino-shi, Tokyo 191-0011 (JP)**
• **ICHINOSE Tatsuya**
**Hino-shi, Tokyo 191-0011 (JP)**
• **SUZUKI Koshi**
**Hino-shi, Tokyo 191-0011 (JP)**

(74) Representative: **Weickmann & Weickmann
PartmbB
Postfach 860 820
81635 München (DE)**

(56) References cited:
WO-A1-2017/033796    WO-A1-2020/027345
WO-A1-2021/157407    CN-A- 106 033 072
JP-A- 2018 136 190    US-A1- 2021 148 858

• **BULSKA EWA ET AL: "Quantitative aspects of
inductively coupled plasma mass spectrometry",
vol. 374, no. 2079, 28 October 2016 (2016-10-28),
GB, pages 20150369, XP093268302, ISSN:
1364-503X, Retrieved from the Internet
<URL:https://royalsocietypublishing.org/doi/
full-xml/10.1098/rsta.2015.0369> DOI: 10.1098/
rsta.2015.0369**

**Description**

BACKGROUND OF THE INVENTION

FIELD OF THE INVENTION

The present invention relates to a method for a quantitative analysis of elements, more particularly to a method for a quantitative analysis of elements as measurement targets from a sample gas containing the measurement targets with an inductively coupled plasma mass spectrometer.

DESCRIPTION OF THE RELATED ART

In recent years, it has been known that an inductively coupled plasma mass spectrometer (hereinafter, abbreviated as "ICP-MS" where appropriate) is used for analyzing metals, organic substances, and the like contaminating a substrate such as a semiconductor wafer and analyzing metals in particles floating in a vapor phase. The inductively coupled plasma mass spectrometry analysis includes a laser ablation ICP-MS (hereinafter, abbreviated as "LA-ICP-MS" where appropriate), which irradiates a solid sample with laser light to evaporate and atomize the sample and directly analyzes the atomized sample.

In the LA-ICP-MS, a normal quantitative analysis method is known in which a multi-element glass or a solid reference sample having a composition close to that of a solid sample as a measurement target is used to calculate concentration conversion factors of elements to be measured, and elements in a solid sample is subjected to a semiquantitative analysis. However, for this solid reference sample, only glasses of specific compositions or a solid reference sample having a composition containing specific metals. Thus, a few elements are guaranteed in a form of solid reference samples. In addition, differences in components between a solid sample as a measurement target and a solid reference sample may make it difficult to perform an accurate quantification because the differences result in different amounts of particles emitted by laser irradiation.

For elements that are not guaranteed in a form of a solid reference sample out of elements contained in a solid sample, a quantification method using a relative response factor is known. In this case, correction is made by use of a detection sensitivity obtained from a standard solution in a normal solution introduction method for an ICP-MS. Specifically, a relative response factor (A/A') is determined from a sensitivity (A) of a guaranteed element obtained by laser irradiation and a sensitivity (A') of the same element obtained from a standard solution by solution introduction, and the relative response factor is applied to a sensitivity B' of an unguaranteed element to determine a sensitivity B obtained by laser irradiation. By the method, weights of all elements detected by laser irradiation of a solid sample are calculated, and concentrations of the elements are calculated from a total value of absolute amounts. However, in the quantification method using relative response factors, introduction of a sample gas generated by the laser irradiation and introduction of the standard solution by the solution introduction are performed in separate operations. Thus, plasma conditions also differ between the introductions, thus causing a problem in that the factor is not constant for all elements.

For this reason, there is proposed, as an LA-ICP-MS quantitative analysis, a method for a quantitative analysis with a standard solution without use of a solid reference sample (e.g., Patent Document 1). In this prior art, a standard solution containing elements that are contained in a solid sample in known amounts are electrically heated to be vaporized and are introduced to an ICP-MS, an element weight per count of a detection signal intensity is determined for all of the elements from detection signal intensities obtained with the ICP-MS, and these element weights are used to perform a quantitative analysis of the elements contained in the solid sample. Specifically, 3 to 10 $\mu$L of the standard solution is introduced to an electric reheating furnace, in which moisture evaporates at about 100°C in advance, and then a temperature in the furnace is rapidly increased to several thousands of degrees (°C) to cause the elements to evaporate. These evaporating elements are carried by argon gas introduced into the furnace and are introduced to the ICP-MS. As a result, a whole amount of elements that are contained in the standard solution introduced to the electric reheating furnace is introduced to plasma in the ICP-MS. From an introduction rate of the standard solution and detection signal intensities, an element weight per count of a detection signal intensity can be determined for each of the elements contained in the standard solution.

In this prior art described in Patent Document 1, multiple elements are analyzed simultaneously with a time-of-flight (TOF) ICP-MS. The TOF-ICP-MS has a sensitivity lower than that of an ICP-MS with a quadrupole mass spectrometer, and thus it is difficult for the TOF-ICP-MS to analyze fine particles. In addition, when the temperature in the electric reheating furnace is raised to several thousands of degrees Celsius, the argon gas expands, which is liable to change detection sensitivities of the ICP-MS. In addition, an element heated by the furnace and introduced to the ICP-MS exists for only several seconds. Thus, an analysis using a quadrupole ICP-MS, not using a TOF-ICP-MS, is limited to that of one element. As a result, it is impossible to analyze all of elements simultaneously in a sample gas. Thus, an analysis by the method using an electric reheating furnace uses a relative sensitivity to a sensitivity obtained with the electric reheating furnace. In this case, a detection sensitivity obtained when a sample gas generated by laser irradiation is introduced differs from a detection sensitivity obtained when an element that evaporates from a standard solution heated in the electric reheating furnace is introduced. From this, it is deemed that the prior art according to Patent Document 1 is not sufficiently practical for a quantitative analysis, and the prior art is not used in actuality.

Furthermore, it is difficult at present to perform a quantitative analysis of a sample gas containing a measurement target because there are few gaseous metal reference samples for the quantitative analysis.

Prior Art Document

Patent Document

Patent Document 1
Japanese Patent Application Laid-Open No. 2018-136190

SUMMARY OF THE INVENTION

TECHNICAL PROBLEM

Under such circumstances, the present invention aims at providing an analysis technique that enables a quantitative analysis of elements in a sample gas, such as the LA-ICP-MS, without use of a solid reference sample.

SOLUTION TO PROBLEM

The present inventors developed a technique that can introduce, to plasma, almost 100% (a whole amount) of a standard solution containing a specific element in a known concentration and introduced from a spray chamber to a torch part by direct supply of the standard solution to a nebulizer at an extremely low flow rate (reference patent document: International Publication No. WO2020/027345) and found that using this technique enables a quantitative analysis of elements in a sample gas without use of a solid reference sample, thus having conceived the present invention.

The present invention is a method for a quantitative analysis of elements with an inductively coupled plasma mass spectrometer including: a gasified sample introduction part introducing a sample gas generated by a combination of a laser ablation device and a gas exchange device or introducing a sample gas including a gas containing a measurement target, the laser ablation device irradiating a solid sample as the measurement target with laser light to evaporate and atomize the solid sample, the gas exchange device replacing a gas component of a gas containing fine particles emitted from the laser ablation with argon gas; and a torch part forming plasma to ionize the sample, an interface part extracting an ion from the plasma, a mass spectrometry part separating the ion, and a detection part detecting the separated ion, the inductively coupled plasma mass spectrometer being provided with a standard solution introduction device including storage means for storing a standard solution containing specific elements in known concentrations and solution introduction means having a standard-solution spray chamber combined with a syringe pump suctioning and discharging the standard solution and a standard-solution nebulizer to which the standard solution is supplied, the gasified sample introduction part and the torch part being connected with a flow channel to which a standard-solution introduction channel is connected, the standard-solution introduction channel introducing the standard solution flowing out from the standard-solution spray chamber, wherein: the standard solution contains, as the specific elements in the known concentrations, all elements contained in the gas containing the solid sample as the measurement target or containing the measurement target, the method includes: a first step of detecting instrument background signal intensities in a state where only argon gas is introduced, then, in a state where the argon gas is introduced, introducing the standard solution from the solution introduction means to the torch part in such a manner as to directly supply the standard solution to the standard-solution nebulizer at a flow rate of 3 μL/min or less, detecting standard-solution signal intensities for all of the elements contained in the standard solution, the standard-solution signal intensities being obtained from is the detection part, subtracting the instrument background signal intensities of the elements from the detected standard-solution signal intensities of the respective elements to calculate respective specific-element standard-solution signal intensities, calculating standard-solution sensitivity values for all of the elements contained in the standard solution based on the specific-element standard-solution signal intensities and introduction rates of the specific elements in the introduced standard solution, the standard-solution sensitivity values each being a specific element weight per count of a corresponding specific-element standard-solution signal intensity, and calculating instrument background standard-solution absolute amounts for all of the elements contained in the standard solution, the instrument background standard-solution absolute amounts being calculated from the instrument background signal intensities and the standard-solution sensitivity values; and a second step of detecting sample-gas signal intensities in a state where only the sample gas is introduced, then introducing the standard solution from the solution introduction means to the torch part in such a manner as to directly supply the standard solution to the standard-solution nebulizer at a flow rate of 3 μL/min or less, detecting mixed signal intensities for all of the elements contained in the sample gas in a state where the sample gas is introduced, the mixed signal intensities being obtained from the detection part, subtracting the sample-gas signal intensities of the elements from the detected mixed signal intensities of the respective elements to calculate respective specific-element mixed standard-solution signal intensities, calculating mixed standard-solution sensitivity values for all of the elements contained in the sample gas based on the specific-element mixed standard-solution signal intensities and the introduction rates of the specific elements in the introduced standard solution, the mixed standard-solution sensitivity values each being a specific element weight per count of a corresponding specific-element mixed standard-solution signal intensity, and calculating sample-gas specific-element absolute amounts for all of the elements contained in the sample gas, the sample-gas specific-element absolute amounts being calculated from the sample-gas signal intensities and the mixed standard-solution sensitivity values, the instrument background standard-solution absolute amounts of the elements contained in the sample gas are subtracted from the sample-gas specific-element absolute amounts of the respective elements to calculate sample-gas-containing specific-element absolute amounts of the respective elements contained in the sample gas for all of the elements contained in the sample gas, the instrument background standard-solution absolute amounts being obtained in the first step, the sample-gas specific-element absolute amounts being obtained in the second step, and concentrations of the elements contained in the sample gas are measured from a total of the sample-gas-containing specific-element absolute amounts of all of the elements contained in the sample gas and the sample-gas-containing specific-element absolute amounts of the respective elements.

In the present invention, the standard solution is introduced from the solution introduction means to the torch part in such a manner as to directly supply the standard solution to the standard-solution nebulizer at a flow rate of 3 μL/min or less. In this case, 100% (a whole amount) of the introduced standard solution is introduced to the plasma. This is demonstrated from the following four verifications (see International Publication No. WO 2020/027345). Verification 1: the standard-solution sensitivity values, each of which was a specific element weight per count of a corresponding standard-solution signal intensity, did not change when the standard-solution spray chamber was heated to change in temperature. Verification 2: a sensitive value obtained from a Au metal fine particle having a known particle diameter substantially matched a standard-solution sensitivity value. Verification 3: when the introduction rate of the standard solution was changed, the signal intensity linearly changed with an increase in the flow rate up to 3 μL/min. When the flow rate was increased to more than 3 μL/min, the signal intensity showed a decreasing tendency, and a phenomenon in which the standard solution started to be trapped in the standard-solution spray chamber was observed. Verification 4: three nebulizers of the same type were used as standard-solution nebulizers, and comparing standard-solution sensitivity values obtained with the nebulizers showed that a resultant relative standard deviation was within 1%.

In the present invention, as the standard solution, one that contains, as specific elements in the known concentrations, all elements contained in a gas containing a solid sample as a measurement target or containing the measurement target is used. As such a standard solution, a mixture of commercial standard solutions can be used. Examples of elements contained in a standard solution obtained by the mixture include Al, As, Sb, Ba, B, Bi, Cd, Ca, Cs, Cr, Co, Cu, Ga, Ge, Fe, Pb, Li, Mg, Mn, Mo, Ni, P, K, Rb, Se, Si, Ag, Na, Sr, Sn, Ti, W, U, V, Zn, Zr, Au, Ir, Pd, Pt, Rh, Ru, Te, Hf, Sb, Ce, Dy, Er, Eu, Gd, Ho, La, Lu, Nd, Pr, Sm, Sc, Tb, Tm, Yb, Y, and the like.

In the present invention, first, in a first step, instrument background noise of an ICP-MS to be used is determined. That is, instrument background standard-solution absolute amounts are calculated for all of the elements contained in the standard solution in a state where only argon gas is introduced. Next, in the present invention, in the second step, the sample-gas specific-element absolute amounts are calculated for all of the elements contained in the sample gas. Then, the instrument background standard-solution absolute amounts, obtained in the first step, of the elements contained in the sample gas are subtracted from the sample-gas specific-element absolute amounts, obtained in the second step, of the respective elements to calculate sample-gas-containing specific-element absolute amounts of the respective elements contained in the sample gas for all of the elements contained in the sample gas. A total of these sample-gas-containing specific-element absolute amounts of all of the elements is, for example, a whole amount of fine particles that are evaporated from the solid sample by laser irradiation and detected with the ICP-MS. From this total of the sample-gas-containing specific-element absolute amounts and the sample-gas-containing specific-element absolute amounts of the elements, concentrations of the elements in the sample gas can be determined. That is, these concentrations of the elements are concentrations of the elements contained in the fine particles evaporating from the solid sample by the laser irradiation and are concentrations of the elements of the solid sample.

In the present invention, in a case where a sample gas including a gas containing a solid sample as a measurement target or containing the measurement target has a composition containing an unmeasurable element in a specific ratio a and containing measurable elements in a ratio (1 - a), the unmeasurable element being incapable of being analyzed with the inductively coupled plasma mass spectrometer, the measurable elements being also known major component elements, as the standard solution, one that contains, as the specific elements in the known concentrations, all elements, other than the unmeasurable element, contained in the sample gas including the gas containing the solid sample as the measurement target or containing the measurement target is used, sample-gas-containing specific-element absolute amounts of the elements contained in the sample gas are calculated for all measurable elements contained in the sample gas, then a known-major-constituent sample-gas-containing specific-element absolute amount total of known major component elements is calculated, the known-major-constituent sample-gas-containing specific-element absolute amount total is divided by (1 - a) to calculate the 100% known-major-constituent sample-gas-containing specific-element absolute amount total, and measuring concentrations of the elements contained in the sample gas from the 100% known-major-constituent sample-gas-containing specific-element absolute amount total and the sample-gas-containing specific-element absolute amounts of the elements.

For example, in a case where SiC, GaN, or the like is adopted as the solid sample, a resulting sample gas contains an unmeasurable element, which cannot be analyzed with an inductively coupled plasma mass spectrometer, such as C (carbon) or N (nitrogen) in a specific ratio a, and has a composition that contains measurable known major component element, such as Si or Ga, in a ratio (1 - a). In such a case, as the standard solution, one that contains, as the specific elements in the known concentrations, all elements other than the unmeasurable element that are contained in the sample gas including the gas containing the solid sample as the measurement target or containing the measurement target is used, and the first step and the second step mentioned above are performed. Then, sample-gas-containing specific-element absolute amounts of the measurable elements are determined, and thus, from them, sample-gas-containing specific-element absolute amounts of the known major component elements are extracted and totalized to determine the known-major-constituent sample-gas-containing specific-element absolute amount total. Then, the known-major-constituent sample-gas-containing specific-element absolute amount total is divided by (1 - a) to calculate the 100% known-major-constituent sample-gas-containing specific-element absolute amount total. Concentrations of the elements contained in the sample gas can be measured from the 100% known-major-constituent sample-gas-containing specific-element absolute amount total and the sample-gas-containing specific-element absolute amounts of the elements other than the known major component elements.

In the present invention, since the first step is the detection of the signal intensities in the state where the argon gas is introduced, and the second step is the detection of the signal intensities in the state where the sample gas is introduced, detection sensitivities in the respective steps are the same. Therefore, even when a change in sensitivity occurs, the change can be corrected, and the concentrations of the elements in the sample gas can be accurately measured.

ADVANTAGEOUS EFFECT OF INVENTION

The present invention allows for a quantitative analysis of elements in a sample gas, such as an LA-ICP-MS, without use of a solid reference sample.

BRIEF DESCRIPTION OF THE DRAWING

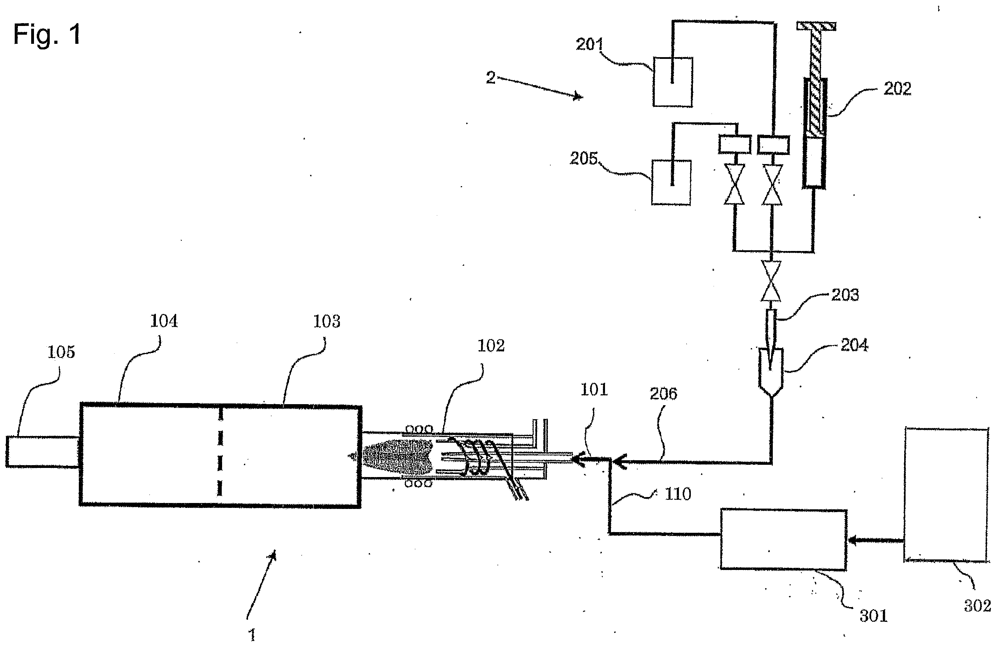

Fig. 1 is a schematic diagram of an inductively coupled plasma mass spectrometer for analyzing a sample gas.

DETAILED DESCRIPTION OF THE PREFERRED EMBODIMENTS

Fig. 1 illustrates a schematic diagram of an inductively coupled plasma mass spectrometer of the present embodiment. The ICP-MS illustrated in Fig. 1 (Model 8900 from Agilent Technologies, Inc.) includes a gasified sample introduction part 101, a torch part 102 that forms plasma to ionize a sample, an interface part 103 that extracts ions from the plasma, a mass spectrometry part 104 that separates the ions, and a detection part 105 that detects the separated ions. The ICP-MS is connected to a standard solution introduction device 2. The standard solution introduction device 2 includes a standard solution storage container 201 that stores a standard solution, a syringe pump 202 that suctions and discharges the standard solution, a standard-solution nebulizer 203 to which the standard solution is supplied, and a standard-solution spray chamber 204. The standard solution introduction device 2 also includes a waste container 205 for waste. To the standard-solution spray chamber 204, a standard-solution introduction channel 206 that introduces, to the torch part 102, the standard solution flowing out is connected. As the syringe pump 202, one having such a performance that can control a flow rate of 0.1 to 99.0 µL/min was used. The controlled flow rate of the syringe pump is determined by calculation from a physical operation amount of a ball screw used in a syringe of the syringe pump. In addition, a gas exchange device 301 is disposed. The gas exchange device 301 replaces gas components of a sample gas including measurement targets with argon gas. The gas exchange device 301 is connected to the gasified sample introduction part 101 via a flow channel 110. The gas exchange device 301 is connected to a laser ablation device 302. The gas exchange device 301 is configured to replace an air component that is emitted from the laser ablation device 302 and contains fine particles with argon gas and supply the sample gas to the gasified sample introduction part 101 through the flow channel 110. In a case where a trace amount of a solution is introduced from the standard solution introduction device 2 under dry plasma conditions as in an LA-ICP-MS, the plasma conditions may change, and a sensitivity of the ICP-MS may fluctuate. In this case, it is effective to create a calibration curve while changing a discharge amount ratio between two syringes of two standard solution introduction devices 2 used in combination, with a discharge amount of the two devices fixed to 3 μL/min.

Next, a quantitative analysis of elements in a solid sample will be described. As a standard solution used in the analysis, commercial standard solutions are available. For example, mixing three types of ICP-MS general-purpose multi-element standard solutions XSTC-622, XSTC-7, and XSTC-1 (from SPEX CertiPrep, the U.S.) enables preparation of a standard solution containing 59 elements.

In the present embodiment, the quantitative analysis of the elements will be described with a case where the solid sample contains 26 elements as measurement targets, by way of example. The 26 elements, which are the measurement targets, are denoted in alphabet: A, B, C, D, ..., and Z. An introduction rate of the standard solution in the introduction at 3 μL/min or less is denoted as N (ag/sec). The introduction rate N of the standard solution is 3 μL/min or less. Thus, the standard solution directly supplied to the standard-solution nebulizer is introduced from the standard-solution spray chamber 204 to the torch part 102 through the standard-solution introduction channel 206, and 100% (a whole amount) of the introduced standard solution is introduced to plasma.

First, in a first step, instrument background signal intensities (Count/sec) are detected in a state where only argon gas is introduced, are detected. The instrument background signal intensities (Count/sec) detected for the element A, element B, element C, element D, ..., and element Z are denoted as follows.

Element A: A_Ar_BL
Element B: B_Ar_BL
Element C: C_Ar_BL
Element D: D_Ar_BL
Element Z: Z_Ar_BL

Then, the standard solution is directly supplied to the standard-solution nebulizer at such a flow rate that the introduction rate of the standard solution is N (ag/sec), and standard-solution signal intensities (Count/sec) obtained from the detection part are detected in a state where the argon gas is introduced. The standard-solution signal intensities (Count/sec) detected for the element A, element B, element C, element D, ..., and element Z are denoted as follows.

Element A: A_Ar_STD
Element B: B_Ar_STD
Element C: C_Ar_STD
Element D: D_Ar_STD
Element Z: Z_Ar_STD

The instrument background signal intensities of the elements are subtracted from the detected standard-solution signal intensities of the respective elements to calculate respective specific-element standard-solution signal intensities. Based on these specific-element standard-solution signal intensities and the introduction rate of the introduced standard solution, standard-solution sensitivity values, each of which is a specific element weight per count of a corresponding specific-element standard-solution signal intensity, are determined. The standard-solution sensitivity values (ag/count) for the element A, element B, element C, element D, ..., and element Z are denoted as follows.

Element A:

$$\text{Element A: A\_Ar\_S} = N / (A\_Ar\_STD - A\_Ar\_BL)$$

Element B:

$$\text{Element B: B\_Ar\_S} = N / (B\_Ar\_STD - B\_Ar\_BL)$$

Element C:

$$\text{Element C: C\_Ar\_S} = N / (C\_Ar\_STD - C\_Ar\_BL)$$

Element D:

$$\text{Element D: D\_Ar\_S} = N / (D\_Ar\_STD - D\_Ar\_BL)$$

Element Z:

$$\text{Element Z: } Z\_Ar\_S = N / (Z\_Ar\_STD - Z\_Ar\_BL)$$

From the instrument background signal intensities of the elements and the standard-solution sensitivity values determined as described above, instrument background standard-solution absolute amounts (ag) are calculated. The instrument background standard-solution absolute amounts (ag) for the element A, element B, element C, element D, ..., and element Z are denoted as follows.

Element A:

$$\text{Element A: } A\_Ar = A\_Ar\_BL \times A\_Ar\_S$$

Element B:

$$\text{Element B: } B\_Ar = B\_Ar\_BL \times B\_Ar\_S$$

Element C:

$$\text{Element C: } C\_Ar = C\_Ar\_BL \times C\_Ar\_S$$

Element D:

$$\text{Element D: } D\_Ar = D\_Ar\_BL \times D\_Ar\_S$$

Element Z:

$$\text{Element Z: } Z\_Ar = Z\_Ar\_BL \times Z\_Ar\_S$$

Next, in a second step, sample-gas signal intensities (Count/sec) are detected in a state where only a sample gas in which a gas component of a gas containing fine particles emitted from the laser ablation device 302 is replaced with argon gas is introduced. The sample-gas signal intensities (Count/sec) detected for the element A, element B, element C, element D, ..., and element Z are denoted as follows.

Element A: A_SAM_BL
Element B: B_SAM_BL
Element C: C_SAM_BL
Element D: D_SAM_BL
Element Z: Z_SAM_BL

Then, the standard solution is directly supplied to the standard-solution nebulizer at such a flow rate that the introduction rate of the standard solution is N (ag/sec), and mixed signal intensities (Count/sec) obtained from the detection part are detected in a state where the sample gas is introduced. The mixed signal intensities (Count/sec) detected for the element A, element B, element C, element D, ..., and element Z are denoted as follows.

Element A: A_SAM_STD
Element B: B_SAM_STD
Element C: C_SAM_STD
Element D: D_SAM_STD
Element Z: Z_SAM_STD

The sample-gas signal intensities of the elements are subtracted from the detected mixed signal intensities of the respective elements to calculate respective specific-element mixed standard-solution signal intensities. Based on these specific-element mixed standard-solution signal intensities and the introduction rate of the introduced standard solution, mixed standard-solution sensitivity values, each of which is a specific element weight per count of a corresponding specific-element mixed standard-solution signal intensity, are determined. The mixed standard-solution sensitivity values (ag/count) for the element A, element B, element C, element D, ..., and element Z are denoted as follows.

Element A:

$$\text{Element A: } A\_SAM\_S = N / (A\_SAM\_STD - A\_SAM\_BL)$$

Element B:

$$\text{Element B: } B\_SAM\_S = N / (B\_SAM\_STD - B\_SAM\_BL)$$

Element C:

$$\text{Element C: } C\_SAM\_S = N / (C\_SAM\_STD - C\_SAM\_BL)$$

Element D:

$$\text{Element D: } D\_SAM\_S = N / (D\_SAM\_STD - D\_SAM\_BL)$$

Element Z:

$$\text{Element Z: } Z\_SAM\_S = N / (Z\_SAM\_STD - Z\_SAM\_BL)$$

From the sample-gas signal intensities of the elements and the mixed standard-solution sensitivity value determined as described above, sample-gas specific-element absolute amounts (ag) are calculated. The sample-gas specific-element absolute amounts (ag) for the element A, element B, element C, element D, ..., and element Z are denoted as follows.

Element A:

$$\text{Element A: } A\_SAM = A\_SAM\_BL \times A\_SAM\_S$$

Element B:

$$\text{Element B: } B\_SAM = B\_SAM\_BL \times B\_SAM\_S$$

Element C:

$$\text{Element C: } C\_SAM = C\_SAM\_BL \times C\_SAM\_S$$

Element D:

$$\text{Element D: } D\_SAM = D\_SAM\_BL \times D\_SAM\_S$$

Element Z:

$$\text{Element Z: } Z\_SAM = Z\_SAM\_BL \times Z\_SAM\_S$$

The instrument background standard-solution absolute amounts of the elements contained in the sample gas that are obtained in the first step are subtracted from sample-gas specific-element absolute amounts of the respective elements that are obtained in the second step to calculate sample-gas-containing specific-element absolute amounts (A", B", C", D", ..., and Z") of the respective elements contained in the sample gas for the elements contained in the sample gas. The sample-gas-containing specific-element absolute amounts (ag) for the element A, element B, element C, element D, ..., and element Z are denoted as follows.

Element A:

$$\text{Element A: } A'' = A\_SAM - A\_Ar$$

Element B:

$$\text{Element B: } B'' = B\_SAM - B\_Ar$$

Element C:

$$\text{Element C: } C'' = C\_SAM - C\_Ar$$

Element D:

$$\text{Element D: } D'' = D\_SAM - D\_Ar$$

Element Z:

$$\text{Element Z: } Z'' = Z\_SAM - Z\_Ar$$

Totalizing the sample-gas-containing specific-element absolute amounts of all elements contained in the sample gas that are obtained as described above gives a total amount of contained elements being the measurement targets contained in the sample gas. From this total of the sample-gas-containing specific-element absolute amounts and the sample-gas-containing specific-element absolute amounts of the elements, a concentration of each of the elements in the sample gas can be determined. The concentrations of the elements in the sample gas for the element A, element B, element C, element D, ..., and element Z are denoted as follows.

$$\text{Concentration of element A: } A'' / (A'' + B'' + C'' + D'' + ... + Z'')$$

$$\text{Concentration of element B: } B'' / (A'' + B'' + C'' + D'' + ... + Z'')$$

$$\text{Concentration of element C: } C'' / (A'' + B'' + C'' + D'' + ... + Z'')$$

$$\text{Concentration of element D: } D'' / (A'' + B'' + C'' + D'' + ... + Z'')$$

$$\text{Concentration of element Z: } Z'' / (A'' + B'' + C'' + D'' + ... + Z'')$$

Subsequently, there will be described a case where a sample gas contains an unmeasurable element, which cannot be analyzed with an inductively coupled plasma mass spectrometer, such as C (carbon) or N (nitrogen) in a specific ratio a. The unmeasurable element is denoted as Z, and its specific ratio is assumed to be a. Known major component elements being measurable are denoted X and Y, and their content ratio is assumed to be (1 - a). In this case, elements A, B, and C to W, other than the elements X, Y, and Z, are measurable trace impurities. As the standard solution, one that contains the measurable elements A, B, C, ..., and Y, other than the element Z, in known concentrations is used.

Performing the first step and the second step described above provides data items on the elements A, B, C, ..., and Y, other than the unmeasurable element Z. Then, sample-gas-containing specific-element absolute amounts of the measurable elements A to Y are determined, and from them, sample-gas-containing specific-element absolute amounts of the known major component elements (X and Y) are extracted and totalized to determine a known-major-constituent sample-gas-containing specific-element absolute amount total.

$$\text{Element X: } X'' = X\_SAM - X\_BL$$

$$\text{Element Y: } Y'' = Y\_SAM - Y\_BL$$

$$\text{Elements (X and Y): } (X + Y)'' = X\_SAM - X\_BL + Y\_SAM - Y\_BL$$

Then, the known-major-constituent sample-gas-containing specific-element absolute amount total (X+Y)" is divided by (1 - a) to calculate a 100% known-major-constituent sample-gas-containing specific-element absolute amount total. From the 100% known-major-constituent sample-gas-containing specific-element absolute amount total and sample-gas-containing specific-element absolute amounts of the elements other than the known major component elements (A to W), concentrations of the elements contained in the sample gas can be determined. Concentrations of the elements A to W are concentrations of impurities contained in the sample gas. In a case where the sample gas is generated from a solid sample, the concentrations of the elements A to W are concentrations of impurities in the solid sample.

$$\text{Concentration of element A: } A'' / ((X + Y)'' / (1 - a))$$

$$\text{Concentration of element B: } B'' / ((X + Y)'' / (1 - a))$$

$$\text{Concentration of element C: } C'' / ((X + Y)'' / (1 - a))$$

$$\text{Concentration of element D: } D'' / ((X + Y)'' / (1 - a))$$

$$\text{Concentration of element W: } W'' / ((X + Y)'' / (1 - a))$$

Next, a result of a test in which a quantitative analysis of impurities was performed on a solid sample containing known impurity elements with an LA-ICP-MS will be described based on Examples. The ICP-MS in use was Model 8900 from Agilent Technologies, Inc.

[Example 1]

In Example 1, a Si wafer was used as the solid sample. Constituent elements of the solid sample include a base material Si and four impurities Na, Al, Mg, and Fe. A standard solution is used in the quantitative analysis in Example 1, in which a concentration of Si was 1 ppm and concentrations of the elements Na, Al, Mg, and Fe were each 10 ppb. As instrument conditions of the ICP-MS, an Ar-gas flow rate was set to 1 L/min, and a high-frequency output was set to 1300 W.

First, as the first step, instrument background signal intensities (Count/sec) were detected in a state where only argon gas was introduced, the standard solution was directly supplied to the standard-solution nebulizer at a flow rate of 1 μL/min, standard-solution signal intensities (Count/sec) were detected in the state where the argon gas was introduced, standard-solution sensitivity values, each of which was a specific element weight per count of a corresponding specific-element standard-solution signal intensity, were determined, and instrument background standard-solution absolute amounts (ag) were measured. When the standard solution was introduced, a gas flow rate of the standard-solution nebulizer was set to 0.3 L/min. When the standard solution is introduced at a flow rate of 1 μL/min, the concentration of Si in the standard solution being 1 ppm results in an introduction rate of Si being 166,666,667 ag/sec, and the concentrations of the elements Na, Al, Mg, and Fe in the standard solution each being 10 ppb result in introduction rates of the elements being 166,667 ag/sec. One hundred percent (a whole amount) of the standard solution introduced at these introduction rates is introduced to plasma. A result of the measurement in the first step is shown in Table 1.

[Table 1]

| ELEMENT | INSTRUMENT BACKGROUND SIGNAL INTENSITY | STANDARD-SOLUTION SIGNAL INTENSITY (WHEN 1 μL/min ADDED) | STANDARD-SOLUTION SENSITIVITY VALUE (ag/count) | INSTRUMENT BACKGROUND STANDARD-SOLUTION ABSOLUTE AMOUNT (ag) |
|---|---|---|---|---|
| Na | 25 | 153,782 | 1.08 | 27.1 |
| Al | 5 | 128,327 | 1.30 | 6.49 |
| Mg | 3 | 93,206 | 1.79 | 5.36 |
| Fe | 5 | 102,321 | 1.63 | 8.14 |
| Si | 3 | 32,740 | 509 | 1527 |
|  | (Count/sec) | (Count/sec) |  |  |

Subsequently, the second step was performed with a sample gas in which a gas component of a gas containing fine particles emitted from a Si wafer being the solid sample with a laser ablation device is replaced with argon gas. As conditions of the laser ablation device, a laser beam wavelength was set to 257 nm, a laser beam irradiation frequency was set to 10,000 Hz, and a laser beam diameter was set to 13 μm.

In the second step, sample-gas signal intensities (Count/sec) were detected in a state where only the sample gas in which the gas component of the gas containing the fine particles emitted from the laser ablation device was replaced with argon gas was introduced, mixed signal intensities (Count/sec) obtained when the standard solution was directly supplied to the standard-solution nebulizer at a flow rate of 1 μL/min were detected in the state where the sample gas was introduced, mixed standard-solution sensitivity values, each of which was a specific element weight per count of a corresponding specific-element mixed standard-solution signal intensity, were determined, and sample-gas specific-element absolute amounts (ag) were measured. A result of the measurement is shown in Table 2.

[Table 2]

| ELEMENT | SAMPLE-GAS SIGNAL INTENSITY (Si WAFER) | MIXED SIGNAL INTENSITY (WHEN 1 μL/min ADDED) | MIXED STANDARD-SOLUTION SENSITIVITY VALUE (Si WAFER) (ag/count) | SAMPLE-GAS SPECIFIC-ELEMENT ABSOLUTE AMOUNT (Si WAFER) (ag) |
|---|---|---|---|---|
| Na | 45 | 134,256 | 1.24 | 55.9 |
| Al | 63 | 101,232 | 1.65 | 104 |
| Mg | 56 | 83,210 | 2.00 | 112 |
| Fe | 12 | 90,215 | 1.85 | 22.2 |
| Si | 582,439 | 612,945 | 546.34 | 318,210,079 |
|  | (Count/sec) | (Count/sec) |  |  |

From the instrument background standard-solution absolute amounts (Table 1) obtained in the first step and the sample-gas specific-element absolute amounts (Table 2) obtained in the second step, concentrations of impurities in the Si wafer being the solid sample were calculated, and a result of the calculation is shown in Table 3.

[Table 3]

| ELEMENT | SECOND-STEP ABSOLUTE AMOUNT - FIRST-STEP ABSOLUTE AMOUNT (ag) | IMPURITY CONCENTRATION IN Si WAFER (ppb) |
|---|---|---|
| Na | 29 | 90.5 |
| Al | 97 | 306 |
| Mg | 107 | 336 |
| Fe | 14 | 44.1 |

(continued)

| ELEMENT | SECOND-STEP ABSOLUTE AMOUNT - FIRST-STEP ABSOLUTE AMOUNT (ag) | IMPURITY CONCENTRATION IN Si WAFER (ppb) |
|---|---|---|
| Si | 318,208,552 | 999,999,224 |

[Example 2]

In Example 2, a result of analyzing a Si-C wafer as the solid sample will be described. In the Si-C wafer being the solid sample, 50% is Si (a known major component element), and 50% is C (an unmeasurable element), with four impurities of Na, Al, Mg, and Fe.

In a quantitative analysis in Example 2, a composition of the standard solution, instrument conditions of the ICP-MS, and conditions of the laser ablation device were set as in Example 1. A first step in Example 2 is the same as the first step in Example 1. Note that C (carbon) is excluded from elements to be analyzed. This is because carbon is contained as an impurity in the argon gas for generating the plasma in the ICP-MS, thus having a high background, and has a high ionization potential, thus resulting in a poor ionization efficiency in the plasma.

As a second step in Example 2, sample-gas signal intensities (Count/sec) were detected in a state where only a sample gas in which a gas component of a gas containing fine particles emitted from the laser ablation device was replaced with argon gas was introduced, mixed signal intensities (Count/sec) obtained when the standard solution was directly supplied to the standard-solution nebulizer at a flow rate of 1 $\mu$L/min were detected in the state where the sample gas was introduced, mixed standard-solution sensitivity values, each of which is a specific element weight per count of a corresponding specific-element mixed standard-solution signal intensity, were determined, and sample-gas specific-element absolute amounts (ag) were measured. A result of the measurement is shown in Table 4.

[Table 4]

| ELEMENT | SAMPLE-GAS SIGNAL INTENSITY (Si-C WAFER) | MIXED SIGNAL INTENSITY (WHEN 1 $\mu$L/min ADDED) | MIXED STANDARD-SOLUTION SENSITIVITY VALUE (Si-C WAFER) (ag/count) | SAMPLE-GAS SPECIFIC-ELEMENT ABSOLUTE AMOUNT (Si-C WAFER) (ag) |
|---|---|---|---|---|
| Na | 230 | 134,256 | 1.24 | 286.0 |
| Al | 540 | 101,232 | 1.66 | 894 |
| Mg | 134 | 83,210 | 2.01 | 269 |
| Fe | 367 | 90,215 | 1.85 | 680.8 |
| Si | 293,570 | 321,456 | 597.67 | 175,458,414 |
|  | (Count/sec) | (Count/sec) |  |  |

From the instrument background standard-solution absolute amounts (see Table 1 in Example 1) obtained in the first step and the sample-gas specific-element absolute amounts (Table 4) obtained in the second step, concentrations of impurities in the Si-C wafer being the solid sample were calculated, and a result of the calculation is shown in Table 5.

[Table 5]

| ELEMENT | SECOND-STEP ABSOLUTE AMOUNT - FIRST-STEP ABSOLUTE AMOUNT (ag) | 100% ABSOLUTE AMOUNT OF SiC FROM SI CONCENTRATION (ag) | IMPURITY CONCENTRATION IN SiC WAFER (ppb) |
|---|---|---|---|
| Na | 259 |  | 738 |
| Al | 887 |  | 2,529 |
| Mg | 263 |  | 751 |
| Fe | 673 |  | 1,917 |
| Si | 175,456,887 | 350,913,773 | 500,000,000 |

Since 50% of the solid sample in Example 2 is Si, an absolute amount of Si in Table 5 (175,456,887 ag) corresponds to 50% of the Si concentration of the solid sample. Thus, an absolute amount of 100% of the Si-C wafer is 175,456,887 ag / 0.5 = 350,913,773 ag. The concentrations of the impurities in the Si-C wafer shown in Table 5 result from a calculation in which absolute amounts of the impurity elements are divided by the absolute amount of 100% of the Si-C wafer (350,913,773 ag).

As shown in Table 3 and Table 5, it was found that a quantitative analysis of concentrations of impurities in a solid sample can be performed with high accuracy without use of a solid standard sample.

REFERENCE SIGNS LIST

1 ICP-MS (main unit)
101 Gasified sample introduction part
102 Torch part
103 Interface part
104 Mass spectrometry part
105 Detection part
110 Flow channel
2 Standard solution introduction device
201 Standard solution storage container
202 Syringe pump
203 Standard-solution nebulizer
204 Standard-solution spray chamber
205 Waste container
206 Standard-solution introduction channel
301 Gas exchange device
302 Laser ablation device

**Claims**

1. A method for a quantitative analysis of elements with an inductively coupled plasma mass spectrometer (1), the inductively coupled plasma mass spectrometer (1) comprising:

a gasified sample introduction part (101) introducing a sample gas generated by a combination of a laser ablation device (302) and a gas exchange device (301) or introducing a sample gas including a gas containing a measurement target, the laser ablation device (302) irradiating a solid sample as the measurement target with laser light to evaporate and atomize the solid sample, the gas exchange device (301) replacing a gas component of a gas containing fine particles emitted from the laser ablation with argon gas; and
a torch part (102) forming plasma to ionize the sample, an interface part (103) extracting an ion from the plasma, a mass spectrometry part (104) separating the ion, and a detection part (105) detecting the separated ion, the inductively coupled plasma mass spectrometer (1) being provided with a standard solution introduction device (2) including storage means (201) for storing a standard solution containing specific elements in known concentrations and solution introduction means having a standard-solution spray chamber (204) combined with a syringe pump (202) suctioning and discharging the standard solution and a standard-solution nebulizer (203) to which the standard solution is supplied, the gasified sample introduction part (101) and the torch part (102) being connected with a flow channel (110) to which a standard-solution introduction channel (206) is connected, the standard-solution introduction channel (206) introducing the standard solution flowing out from the standard-solution spray chamber (204), wherein:

the standard solution contains, as the specific elements in the known concentrations, all elements contained in the gas containing the solid sample as the measurement target or containing the measurement target, the method comprises:

a first step of detecting instrument background signal intensities in a state where only argon gas is introduced, then, in a state where the argon gas is introduced, introducing the standard solution from the solution introduction means to the torch part (102) in such a manner as to directly supply the standard solution to the standard-solution nebulizer (203) at a flow rate of 3 $\mu$L/min or less, detecting standard-solution signal intensities for all of the elements contained in the standard solution, the standard-solution signal intensities being obtained from the detection part (105), subtracting the instrument background signal intensities of the elements from the detected standard-solution signal intensities of the respective elements to calculate respective specific-element standard-solution signal intensities, calculating standard-solution sensitivity values for all of the elements contained in the standard solution based on the specific-element standard-solution signal intensities and introduction rates of the specific elements in the introduced standard solution, the standard-solution sensitivity values each being a specific element weight per count of a corresponding specific-element standard-solution signal intensity, and calculating instrument background standard-solution absolute amounts for all of the elements contained in the standard solution, the instrument background standard-solution absolute amounts being calculated from the instrument background signal intensities and the standard-solution sensitivity values; and

a second step of detecting sample-gas signal intensities in a state where only the sample gas is introduced, then introducing the standard solution from the solution introduction means to the torch part (102) in such a manner as to directly supply the standard solution to the standard-solution nebulizer (203) at a flow rate of 3 μL/min or less, detecting mixed signal intensities for all of the elements contained in the sample gas in a state where the sample gas is introduced, the mixed signal intensities being obtained from the detection part (105), subtracting the sample-gas signal intensities of the elements from the detected mixed signal intensities of the respective elements to calculate respective specific-element mixed standard-solution signal intensities, calculating mixed standard-solution sensitivity values for all of the elements contained in the sample gas based on the specific-element mixed standard-solution signal intensities and the introduction rates of the specific elements in the introduced standard solution, the mixed standard-solution sensitivity values each being a specific element weight per count of a corresponding specific-element mixed standard-solution signal intensity, and calculating sample-gas specific-element absolute amounts for all of the elements contained in the sample gas, the sample-gas specific-element absolute amounts being calculated from the sample-gas signal intensities and the mixed standard-solution sensitivity values,

the instrument background standard-solution absolute amounts of the elements contained in the sample gas are subtracted from the sample-gas specific-element absolute amounts of the respective elements to calculate sample-gas-containing specific-element absolute amounts of the respective elements contained in the sample gas for all of the elements contained in the sample gas, the instrument background standard-solution absolute amounts being obtained in the first step, the sample-gas specific-element absolute amounts being obtained in the second step, and

concentrations of the elements contained in the sample gas are measured from a total of the sample-gas-containing specific-element absolute amounts of all of the elements contained in the sample gas and the sample-gas-containing specific-element absolute amounts of the respective elements.

2. The method for a quantitative analysis of elements according to claim 1, wherein

in a case where a sample gas including a gas containing a solid sample as a measurement target or containing the measurement target has a composition containing an unmeasurable element in a specific ratio a and containing measurable elements in a ratio (1 - a), the unmeasurable element being incapable of being analyzed with the inductively coupled plasma mass spectrometer (1), the measurable elements being also known major component elements,

the standard solution contains, as the specific elements in the known concentrations, all elements, other than the unmeasurable element, contained in the sample gas including the gas containing the solid sample as the measurement target or containing the measurement target,

the method comprises:

calculating, after the calculating sample-gas-containing specific-element absolute amounts of the elements contained in the sample gas for all measurable elements contained in the sample gas, a known-major-constituent sample-gas-containing specific-element absolute amount total of known major component elements,

dividing the known-major-constituent sample-gas-containing specific-element absolute amount total by (1 - a) to calculate a 100% known-major-constituent sample-gas-containing specific-element absolute amount total; and

measuring concentrations of the elements contained in the sample gas from the 100% known-major-constituent sample-gas-containing specific-element absolute amount total and the sample-gas-containing specific-element absolute amounts of the elements other than the known major component elements.

**Patentansprüche**

1.  Verfahren für eine quantitative Analyse von Elementen mit einem induktiv gekoppelten Plasma-Massenspektrometer (1), wobei das induktiv gekoppelte Plasma-Massenspektrometer (1) umfasst:

    einen Vergaste-Probe-Einführteil (101), welcher ein Probengas einführt, welches durch eine Kombination von einer Laserablationsvorrichtung (302) und einer Gasaustauschvorrichtung (301) erzeugt worden ist, oder ein Probengas einführt, welches ein Gas umfasst, welches ein Messziel enthält, wobei die Laserablationsvorrichtung (302) eine feste Probe als das Messziel mit Laserlicht bestrahlt, um die feste Probe zu verdampfen und zu atomisieren, wobei die Gasaustauschvorrichtung (301) eine Gaskomponente eines Gases, welches feine Partikel enthält, welche aus der Laserablation emittiert worden sind, durch Argongas ersetzt; und

    einen Brennerteil (102), welcher Plasma bildet, um die Probe zu ionisieren, einen Schnittstellenteil (103), welcher ein Ion aus dem Plasma extrahiert, einen Massenspektrometrie-Teil (104), welcher das Ion trennt, und einen Detektionsteil (105), welcher das getrennte Ion detektiert,
    wobei das induktiv gekoppelte Plasma-Massenspektrometer (1) mit einer Standardlösungs-Einführvorrichtung (2) bereitgestellt ist, welche Speichermittel (201) zum Speichern einer Standardlösung, welche spezifische Elemente in bekannten Konzentrationen enthält, und Lösungseinführmittel umfasst, welche eine Standardlösungssprühkammer (204) kombiniert mit einer Spritzenpumpe (202), welche die Standardlösung ansaugt und abgibt, und einem Standardlösungszerstäuber (203), welchem die Standardlösung zugeführt wird, aufweist, wobei der Vergaste-Probe-Einführteil (101) und der Brennerteil (102) mit einem Fließkanal (110) verbunden sind, mit welchem ein Standardlösungseinführkanal (206) verbunden ist, wobei der Standardlösungseinführkanal (206) die Standardlösung einführt, welche aus der Standardlösungssprühkammer (204) heraus fließt, wobei:

    die Standardlösung als spezifische Elemente in den bekannten Konzentrationen alle Elemente enthält, welche in dem Gas enthalten sind, welches die feste Probe als das Messziel enthält oder das Messziel enthält,
    wobei das Verfahren umfasst:

    einen ersten Schritt aus Detektieren von Instrumentenhintergrund-Signalintensitäten in einem Zustand, in welchem nur Argongas eingeführt wird, dann, in einem Zustand, in welchem das Argongas eingeführt ist, Einführen der Standardlösung aus den Lösungseinführmitteln in den Brennerteil (102) in einer solchen Weise, dass die Standardlösung direkt dem Standardlösungszerstäuber (203) mit einer Flussrate von 3 μl/min oder weniger zugeführt wird, Detektieren der Standardlösungs-Signalintensitäten für alle der Elemente, welche in der Standardlösung enthalten sind, wobei die Standardlösungs-Signalintensitäten von dem Detektionsteil (105) erhalten werden, Subtrahieren der Instrumentenhintergrund-Signalintensitäten der Elemente von den detektierten Standardlösungs-Signalintensitäten der jeweiligen Elemente, um jeweilige elementspezifische Standardlösungs-Signalintensitäten zu berechnen, Berechnen von Standardlösungs-Empfindlichkeitswerten für alle der Elemente, welche in der Standardlösung enthalten sind, basierend auf den elementspezifischen Standardlösungs-Signalintensitäten und Einführraten der spezifischen Elemente in der eingeführten Standardlösung, wobei die Standardlösungs-Empfindlichkeitswerte je ein spezifisches Elementgewicht pro Zählung einer entsprechenden elementspezifischen Standardlösungs-Signalintensität sind, und Berechnen von Instrumentenhintergrund-Standardlösungsabsolutmengen für alle der Elemente, welche in der Standardlösung enthalten sind, wobei die Instrumentenhintergrund-Standardlösungsabsolutmengen aus den Instrumentenhintergrund-Signalintensitäten und den Standardlösungs-Empfindlichkeitswerten berechnet werden; und
    einen zweiten Schritt aus Detektieren von Probengas-Signalintensitäten in einem Zustand, in welchem nur das Probengas eingeführt wird, dann Einführen der Standardlösung aus den Lösungseinführmitteln in den Brennerteil (102) in einer solchen Weise, dass die Standardlösung direkt dem Standardlösungszerstäuber (203) mit einer Flussrate von 3 μl/min oder weniger zugeführt wird, Detektieren gemischter Signalintensitäten für alle der Elemente, welche in dem Probengas enthalten sind, in einem Zustand, in welchem das Probengas zugeführt ist, wobei die gemischten Signalintensitäten von dem Detektionsteil (105) erhalten werden, Subtrahieren der Probengas-Signalintensitäten der Elemente von den detektierten gemischten Signalintensitäten der jeweiligen Elemente, um jeweilige elementspezifische gemischte Standardlösungs-Signalintensitäten zu berechnen, Berechnen gemischter Standardlösungs-Empfindlichkeitswerte für alle der Elemente, welche in dem Probengas enthalten sind, basierend auf den elementspezifischen gemischten Standardlösungs-Signalintensitäten und den Einführraten der spezifischen Elemente in der eingeführten Standardlösung, wobei die gemischten Standardlösungs-Empfindlichkeitswerte je ein spezifisches Elementgewicht pro Zählung einer entsprechenden elementspezifischen gemischten Standardlösungs-Signalintensität sind, und Berechnen von Probengas-elementspezifischen Absolutmengen für alle der Elemente, welche in dem Probengas enthalten sind, wobei die Probengas-elementspezifischen Absolutmengen aus den Probengas-Signalintensitäten und den gemischten Standardlösungs-Empfindlichkeitswerten berechnet werden,

wobei die Instrumentenhintergrund-Standardlösungs-Absolutmengen der Elemente, welche in dem Probengas enthalten sind, von den Probengas-elementspezifischen Absolutmengen der jeweiligen Elemente subtrahiert werden, um probengasenthaltene elementspezifische Absolutmengen der jeweiligen Elemente, welche in dem Probengas enthalten sind, für alle der Elemente zu berechnen, welche in dem Probengas enthalten sind, wobei die Instrumentenhintergrund-Standardlösungs-Absolutmengen in dem ersten Schritt erhalten werden, wobei die Probengas-elementspezifischen Absolutmengen in dem zweiten Schritt erhalten werden, und

wobei Konzentrationen der Elemente, welche in dem Probengas enthalten sind, aus einer Gesamtheit der probengasenthaltenen elementspezifischen Absolutmengen aller der Elemente, welche in dem Probengas enthalten sind, und den probengasenthaltenen elementspezifischen Absolutmengen der jeweiligen Elemente gemessen werden.

2. Verfahren für eine quantitative Analyse von Elementen nach Anspruch 1, wobei

in einem Fall, in welchem ein Probengas, welches ein Gas umfasst, welches eine feste Probe als ein Messziel enthält oder welches das Messziel enthält, eine Zusammensetzung aufweist, welche ein nicht messbares Element in einem spezifischen Verhältnis a enthält und messbare Elemente in einem Verhältnis (1 - a) enthält, wobei das nicht messbare Element nicht imstande ist, mit dem induktiv gekoppelten Plasma-Massenspektrometer (1) analysiert zu werden, wobei die messbaren Elemente auch bekannte Hauptkomponentenelemente sind,

die Standardlösung als die spezifischen Elemente in den bekannten Konzentrationen alle Elemente außer dem nicht messbaren Element enthält, welche in dem Probengas enthalten sind, welches das Gas umfasst, welches die feste Probe als das Messziel enthält oder welches das Messziel enthält,

wobei das Verfahren umfasst:

Berechnen, nach der Berechnung von probengasenthaltenen elementspezifischen Absolutmengen der Elemente, welche in dem Probengas enthalten sind, für alle messbaren Elemente, welche in dem Probengas enthalten sind, einer Bekannte-Hauptkonstituenten-probengasenthaltenen elementspezifischen Absolutmengengesamtheit von bekannten Hauptkomponentenelementen,

Teilen der Bekannte-Hauptkonstituenten-probengasenthaltenen elementspezifischen Absolutmengengesamtheit durch (1-a), um eine 100% Bekannte-Hauptkonstituenten-probengasenthaltene elementspezifische Absolutmengengesamtheit zu berechnen; und

Messen von Konzentrationen der Elemente, welche in dem Probengas enthalten sind, aus der 100% Bekannte-Hauptkonstituenten-probengasenthaltenen elementspezifischen Absolutmengengesamtheit und den probengasenthaltenen elementspezifischen Absolutmengen der Elemente außer den bekannten Hauptkomponentenelementen.

## Revendications

1. Procédé d'analyse quantitative d'éléments au moyen d'un spectromètre de masse à plasma à couplage inductif (1), le spectromètre de masse à plasma à couplage inductif (1) comprenant :

une partie d'introduction d'échantillon gazéifié (101) introduisant un gaz échantillon généré par une combinaison d'un dispositif d'ablation par laser (302) et d'un dispositif d'échange gazeux (301), ou introduisant un gaz échantillon comprenant un gaz contenant une cible de mesure, le dispositif d'ablation par laser (302) exposant un échantillon solide, en tant que la cible de mesure, à une lumière laser pour évaporer et atomiser l'échantillon solide, le dispositif d'échange gazeux (301) remplaçant un constituant gazeux d'un gaz contenant des particules fines émises par l'ablation par laser par un gaz d'argon ; et une partie torche (102) formant un plasma pour ioniser l'échantillon, une partie interface (103) extrayant un ion du plasma, une partie de spectrométrie de masse (104) séparant l'ion, et une partie de détection (105) détectant l'ion séparé,

le spectromètre de masse à plasma à couplage inductif (1) étant pourvu d'un dispositif d'introduction de solution étalon (2) comprenant un moyen de contenance (201) destiné à contenir une solution étalon contenant des éléments spécifiques à des concentrations connues et un moyen d'introduction de solution comportant une chambre de pulvérisation de solution étalon (204) combinée avec une pompe à seringue (202) aspirant et évacuant la solution étalon et un nébuliseur de solution étalon (203) auquel est délivrée la solution étalon, la partie d'introduction d'échantillon gazéifié (101) et la partie torche (102) étant reliées par un canal d'écoulement (110) avec lequel communique un canal d'introduction de solution étalon (206), le canal d'introduction de solution étalon (206) introduisant la solution étalon s'écoulant hors de la chambre de pulvérisation de solution étalon (204),

dans lequel :

la solution étalon contient, en tant que les éléments spécifiques aux concentrations connues, tous les éléments contenus dans le gaz contenant l'échantillon solide en tant que la cible de mesure ou contenant la cible de mesure,

le procédé comprenant :

une première étape consistant à détecter des intensités de signaux de fond d'instrument dans un état dans lequel seul un gaz d'argon est introduit, puis, dans un état dans lequel le gaz d'argon est introduit, à introduire la solution étalon à partir du moyen d'introduction de solution dans la partie torche (102) de façon à délivrer directement la solution étalon au nébuliseur de solution étalon (203) à un débit de 3 μL/min au maximum, à détecter des intensités de signaux de solution étalon de tous les éléments contenus dans la solution étalon, les intensités de signaux de solution étalon étant obtenues à partir de la partie de détection (105), à soustraire les intensités de signaux de fond d'instrument des éléments des intensités de signaux de solution étalon détectées des éléments respectifs pour calculer des intensités de signaux de solution étalon d'éléments spécifiques respectifs, à calculer des valeurs de sensibilité de solution étalon de tous les éléments contenus dans la solution étalon sur la base des intensités de signaux de solution étalon d'éléments spécifiques et de taux d'introduction des éléments spécifiques dans la solution étalon introduite, les valeurs de sensibilité de solution étalon correspondant individuellement à un poids d'élément spécifique par compte d'une intensité de signaux de solution étalon d'élément spécifique correspondant, et à calculer des quantités absolues de solution étalon de fond d'instrument de tous les éléments contenus dans la solution étalon, les quantités absolues de solution étalon de fond d'instrument étant calculées à partir des intensités de signaux de fond d'instrument et des valeurs de sensibilité de solution étalon ; et

une seconde étape consistant à détecter des intensités de signaux de gaz échantillon dans un état dans lequel seul le gaz échantillon est introduit, puis à introduire la solution étalon à partir du moyen d'introduction de solution dans la partie torche (102) de façon à délivrer directement la solution étalon au nébuliseur de solution étalon (203) à un débit de 3 μL/min au maximum, à détecter des intensités de signaux mélangées de tous les éléments contenus dans le gaz échantillon dans un état dans lequel le gaz échantillon est introduit, les intensités de signaux mélangées étant obtenues à partir de la partie de détection (105), à soustraire les intensités de signaux de gaz échantillon des éléments des intensités de signaux mélangées détectées des éléments respectifs pour calculer des intensités de signaux de solution étalon mélangées d'éléments spécifiques respectifs, à calculer des valeurs de sensibilité de solution étalon mélangées de tous les éléments contenus dans le gaz échantillon sur la base des intensités de signaux de solution étalon mélangées d'éléments spécifiques et des taux d'introduction des éléments spécifiques dans la solution étalon introduite, les valeurs de sensibilité de solution étalon mélangées correspondant individuellement à un poids d'élément spécifique par compte d'une intensité de signaux de solution étalon mélangée d'éléments spécifiques correspondants, et à calculer des quantités absolues d'éléments spécifiques de gaz échantillon de tous les éléments contenus dans le gaz échantillon, les quantités absolues d'éléments spécifiques de gaz échantillon étant calculées à partir des intensités de signaux de gaz échantillon et des valeurs de sensibilité de solution étalon mélangées,

les quantités absolues de solution étalon de fond d'instrument des éléments contenus dans le gaz échantillon sont soustraites des quantités absolues d'éléments spécifiques de gaz échantillon des éléments respectifs pour calculer des quantités absolues d'éléments spécifiques contenus dans le gaz échantillon des éléments respectifs contenus dans le gaz échantillon de tous les éléments contenus dans le gaz échantillon, les quantités absolues de solution étalon de fond d'instrument étant obtenues à la première étape, les quantités absolues d'éléments spécifiques de gaz échantillon étant obtenues à la seconde étape, et

des concentrations des éléments contenus dans le gaz échantillon sont mesurées à partir d'un total des quantités absolues d'éléments spécifiques contenus dans le gaz échantillon de tous les éléments contenus dans le gaz échantillon et des quantités absolues d'éléments spécifiques contenus dans le gaz échantillon des éléments respectifs.

2. Procédé d'analyse quantitative d'éléments selon la revendication 1, dans lequel

dans un cas dans lequel un gaz échantillon comprenant un gaz contenant un échantillon solide en tant que cible de mesure ou contenant la cible de mesure a une composition contenant un élément non mesurable à un taux spécifique a et contenant des éléments mesurables à un taux (1 - a), l'élément non mesurable ne pouvant pas être analysé par le spectromètre de masse à plasma à couplage inductif (1), les éléments mesurables étant également des éléments constituants principaux connus,

la solution étalon contient, en tant que les éléments spécifiques aux concentrations connues, tous les éléments, autres que l'élément non mesurable, contenus dans le gaz échantillon comprenant le gaz contenant l'échantillon solide en tant que la cible de mesure ou contenant la cible de mesure,

le procédé comprend les étapes consistant à :

calculer, après le calcul de quantités absolues d'éléments spécifiques contenus dans le gaz échantillon des éléments contenus dans le gaz échantillon de tous les éléments mesurables contenus dans le gaz échantillon, un total de quantités absolues d'éléments spécifiques contenus dans le gaz échantillon de constituants principaux connus, de tous les éléments constituants principaux connus,

diviser le total de quantités absolues d'éléments spécifiques contenus dans le gaz échantillon de constituants principaux connus par (1 - a) pour calculer un total de quantités absolues d'éléments spécifiques contenus dans le gaz échantillon de constituants principaux connus à 100 % ; et

mesurer des concentrations des éléments contenus dans le gaz échantillon à partir du total de quantités absolues d'éléments spécifiques contenus dans le gaz échantillon de constituants principaux connus à 100 % et des quantités absolues d'éléments spécifiques contenus dans le gaz échantillon des éléments autres que les éléments constituants principaux connus.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018136190 A

- WO 2020027345 A